# EUROPEAN PATENT SPECIFICATION

(11) **EP 2 679 040 B1**
(45) Date of publication and mention of the grant of the patent: **04.04.2018**
(21) Application number: 11867272.4
(22) Date of filing: 09.06.2011
(51) Int. Cl.: H04W 16/14, H04B 1/707, H04W 12/02, H04W 4/06

(54) **METHOD AND APPARATUS FOR DISTRIBUTED RADIO RESOURCE MANAGEMENT FOR INTERCELL INTERFERENCE COORDINATION**
VERFAHREN UND VORRICHTUNG FÜR VERTEILTE FUNKRESSOURCENVERWALTUNG FÜR INTERFERENZKOORDINATION ZWISCHEN ZELLEN
PROCÉDÉ ET APPAREIL DE GESTION DE RESSOURCES RADIO DISTRIBUÉES POUR LA COORDINATION DU BROUILLAGE INTERCELLULAIRE

(43) Date of publication of application: 01.01.2014
(73) Proprietor: BlackBerry Limited, Waterloo, ON N2K 0A7 (CA)
(72) Inventor: VRZIC, Sophie, Kanata, Ontario K2KT 0A9 (CA); BONTU, Chandra Sekhar, Ontario, Canada K2J 5G8 (CA); STEER, David G., Kanata, Ontario K2K 3K1 (CA)
(74) Representative: Hanna Moore + Curley
(86) International application number: PCT/CA2011/000671
(87) International publication number: WO 2012/167342

(56) References cited:
- WO-A1-2011/060376
- US-A1- 2008 261 639
- US-A1- 2009 197 550
- US-A1- 2009 209 265
- US-A1- 2009 238 117
- RENESAS ELECTRONICS EUROPE: "Neighbour cell measurements in eICIC", 3GPP DRAFT; R2-110489 NEIGHBOUR CELL MEASUREMENTS IN EICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050493078, [retrieved on 2011-01-11]
- ERICSSON ET AL: "On Macro-Femto interference handling", 3GPP DRAFT; R1-106387, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 10 November 2010 (2010-11-10), XP050468249, [retrieved on 2010-11-10]

## Description

### FIELD OF THE DISCLOSURE

The present disclosure relates to radio resource management for inter-cell interference coordination and in particular to radio resource management for inter-cell interference coordination in heterogeneous networks.

### BACKGROUND

Heterogeneous networks consist of macro cells, pico cells and femto cells, among others, operating on different radio access technologies (RATs), including but not limited to the 3^{rd} Generation Partnership Project - Long Term Evolution (3GPP-LTE) or WiMAX. In such networks, interference coordination becomes more challenging compared with traditional homogenous networks. In particular, heterogeneous networks may be characterized by cells or network nodes of varying capabilities and the number of nodes required to cover the network area may increase. As a result, interference coordination between the neighboring cells becomes more complex. In addition, the presence of multiple radio access technologies may make coordination among network nodes more challenging.

In homogeneous networks, coordination information, such as resource utilization, is sent by each enhanced node B (eNB) or Base Station (BS), hereinafter referred to as a network node, to neighboring network nodes over a wired or wireless inter-node backhaul communication link. The decision on how to distribute power across the available resources or resource blocks (RBs) on the downlink (DL) is made by each network node independently after receiving the information from neighboring nodes. The approach therefore requires several iterations of backhaul messaging between neighboring nodes to stabilize to an optimal operating point.

In heterogeneous networks, a direct communication link may not exist between all networks nodes for exchanging information necessary for inter-cell interference coordination. In particular, some of the network nodes may be deployed by different operators. Further, a direct communication link may not exist where the network nodes support different radio access technologies.

US 20090238117 - A1 discloses a method for applying a priority of a closed subscriber group (CSG) cell, including receiving priority information for each of a plurality of communication frequencies over which the CSG cell can communicate; storing the priority information at a wireless transmit/receive unit; and applying the priority information to at least one of: taking measurements on a communication frequency, selecting to a CSG cell in the communication frequency, or reselecting to a CSG cell in the communication frequency.

### SUMMARY

The present teaching provides a method as detailed in claim 1. Also provided is a user equipment according to claim 11 and a method according to claim 12. Advantageous features are provided in dependent claims.

### BRIEF DESCRIPTION OF THE DRAWINGS

The present disclosure will be better understood with reference to the drawings, in which:
**Figure 1** is a simplified topological diagram showing typical deployment of heterogeneous wireless networks comprising different radio access technologies;
**Figure 2** is a simplified topological diagram showing a heterogeneous network in which a user equipment reports to non-serving network nodes;
**Figure 3** shows a diagram for fractional frequency reuse having four zones and three cells;
**Figure 4** is a flow diagram showing the reporting of events based on measured interference power;
**Figure 5** is a flow diagram showing the reporting of events based on transmit power;
**Figure 6** shows an uplink common control channel structure when a user equipment is not uplink synchronized with a target node;
**Figure 7** shows an uplink common control channel structure when a user equipment is uplink synchronized with a target node; and
**Figure 8** is a block diagram of an exemplary user equipment capable of being used with the embodiments of the present disclosure.

### DETAILED DESCRIPTION OF THE DRAWINGS

The present disclosure provides a method at a user equipment comprising: obtaining an event having event conditions from system information multicasts of a plurality of network nodes; and sending an uplink message to at least one network node for any event whose conditions are satisfied utilizing resources allocated for the event.

The present disclosure further provides a user equipment comprising: a processor; and a communications subsystem, wherein the processor and communications subsystem cooperate to: obtain an event having event conditions from system information multicasts of a plurality of network nodes; and send an uplink message to at least one of the network nodes for any event whose conditions are satisfied utilizing resources allocated for the event.

The present disclosure still further provides a method at a network node comprising: multicasting an event having event conditions to a plurality of user equipments; receiving a communication from a user equipment attached to the said network node or any neighbor network nodes, said communication providing an indication that the event conditions are met at the user equipment; compiling statistics, based on the receiving, of network conditions; and performing resource allocation based on the compiled statistics.

The present disclosure still further provides a network node comprising: a processor; and a communications subsystem, wherein the processor and communications subsystem cooperate to: multicast an event having event conditions to a plurality of user equipments; receive a communication from a user equipment, said communication providing an indication that the event conditions are met at the user equipment; compile statistics, based on the receiving, of network conditions; and perform resource allocation based on the compiled statistics.

The present disclosure still further provides a method in a network comprising: multicasting an event from a network node to a plurality of user equipments, the event having event conditions; obtaining the event having event conditions at at least one of the plurality of user equipments; sending an uplink message from the one of the plurality of user equipments for any event whose conditions are satisfied utilizing resources allocated for the event; receiving the uplink message at the network node; compiling statistics, based on the receiving, of network conditions; and performing resource allocation based on the collected statistics.

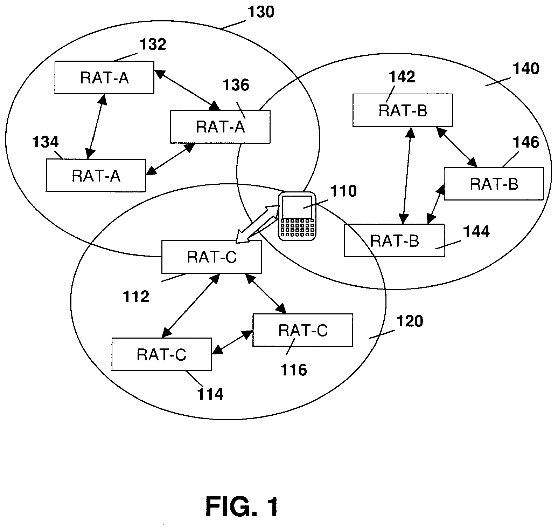

Reference is now made to **Figure 1****,** which shows a single frequency network deployment scenario where a user equipment (UE) is communicating with its serving node using one radio access technology while other nearby network nodes operating on the same frequency band are using a different radio access technology. In particular, UE **110** is communicating with network node **112** using radio access technology "C". Network node **112, 114** and **116** belong to a first radio access technology **120.** In the example of **Figure 1** this first radio access technology is denoted as RAT-C.

Similarly, a second RAT **130** includes network nodes **132, 134** and **136.** In the example of **Figure 1** this is denoted as RAT-A.

A third radio access technology area **140** includes network nodes **142, 144** and **146.** In **Figure 1** the third radio access technology is denoted as RAT-B.

In the example of **Figure 1** the network nodes that belong to different radio access technologies may not have a direct communication link between them. Thus, network nodes **112, 114** and **116** may have communication links between them but network node **112** may not have any direct communication link with network **134,** for example. In some scenarios, the network nodes **112, 114** and **116** may not have a backhaul communication link among them, even though they operate using the same radio access technology, if each of these nodes belong to different operators.

As indicated above, a network node may be any node within a network capable of providing data to a user equipment and can include a Node B, enhanced Node B, home enhanced Node B (HeNB), base station, relay, among others. Typically, a network node will include at least a processor and communication subsystem to communicate with other network nodes and with user equipments.

In the example of **Figure 1****,** UE **110** is capable of communicating with multiple radio access technologies.

The example of **Figure 1** may arise when different operators are using shared spectrum or operating different radio access technologies, or when different network nodes from the same network operator and are using shared spectrum using different RATs.

In the example of **Figure 1**, the areas with the same RAT may have inter-cell interference coordination (ICIC). For example, in Long Term Evolution (LTE) systems, the coordination involves backhaul messages sent between neighboring eNBs. The messages contain the planned transmit power per resource block (RB). After several iterations of these backhaul messages, the power bandwidth profile typically stabilizes so that high power RBs of neighboring eNBs do not overlap.

In other embodiments, within the same RAT different power bandwidth profiles are fixed and the profile used by each eNB is adapted based on messages from neighboring nodes. This also requires backhaul signalling to inform a neighboring node to adjust its power bandwidth profile.

Thus, the present disclosure provides for distributed or independent radio resource management (RRM) at each network node when a deployed cellular network has at least one of the following:
- multiple RATs are operating over the same or overlapping frequency bands;
- network nodes and/or some parts of the network are operated by different cellular operators; or
- some of the network nodes may not have direct or indirect backhaul communication links between them.

In the present disclosure, at least a subset of the UEs that are operating within each cell are assumed to be capable of communicating with network nodes of different radio access technologies. However, not all UEs are required to be capable of communication with each RAT. Further, the UEs are assumed to be authorized to communicate with the network nodes and are capable of reading broadcast/multicast messages from the RATs in the vicinity.

In accordance with the present disclosure, the UEs can provide information to both the serving node and to neighboring nodes through uplink common control channels (UL CCCH) configured by each network node. The information sent over the UL CCCH of the neighboring node may consist of a collection of statistics from the UEs, and in some embodiments cell edge UEs of the particular cell. The information can then be used, for example, by a target eNB for the purpose of managing over-the-air resources in future resource allocation decisions.

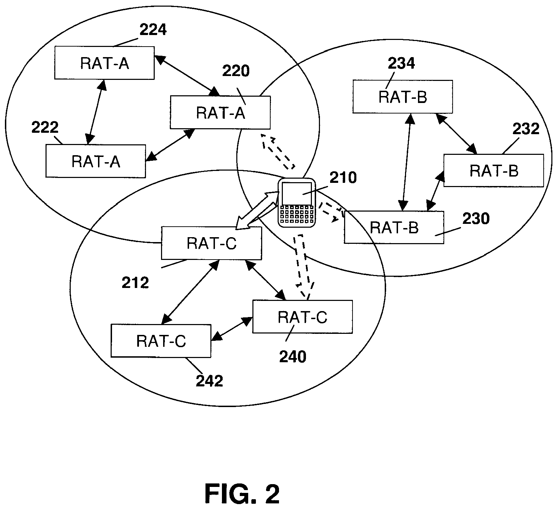

Reference is now made to **Figure 2****.** In the embodiment of **Figure 2****,** UE **210** communicates with a network node **212** and network node **212** is the serving network node for UE **210.** However, UE **210** is further capable of receiving and decoding information from radio access technologies "A" and "B", as well as the radio access technology "C" of serving node **212.** Thus, UE **210** can receive communications from non-serving network nodes **220** of radio access technology 'A' and network node **230** of radio access technology 'B', as well as from network node **240** of radio access technology "C".

Other network nodes such as network node **222** and **224** may have the same radio access technology as network node **220** and be able to communicate with network node **220** over backhaul channels.

Similarly, network nodes **232** and **234** may have the same radio access technology as network node **230** and be able to communicate with network node **220** over backhaul channels.

Similarly, network nodes **242** and **240** may communicate with each other and also with network node **212** over backhaul channels.

**Figure 2** illustrates the UE **210** providing information to non-serving network nodes, which may be operating using different radio access technologies than the serving node, through the use of an UL CCCH configured for each of the non-serving nodes. The nodes may or may not be interfering network nodes in accordance with the present disclosure.

Each network node may have an UL CCCH and this may be RAT specific. The UL CCCH channel descriptor and event triggers may be broadcast/multicast by a network node. A multi-RAT capable UE **210** can decode the RAT specific broadcast/multicast channels and store information about events and uplink CCCH descriptors for each network node, as described in more detail below.

Further, as described in more detail below, a UE **210** may make measurements with respect to the network nodes and check for an event occurrence. The measurements may be RAT specific, event specific or both.

When an event occurs with respect to a network node, the UE may send an event indicator on the uplink CCCH to the node, as described in more detail below.

Thus, for example, referring to **Figure 2****,** UE **210** is capable of communicating with network nodes of RATs "A"/"B"/"C". The UE has serving node **212,** which supports RAT "C" and may perform event specific measurements with regard to neighboring network nodes. Specific events are advertised by each neighboring node in their respective broadcast/multicast channels. If the RAT measurement meets the criteria defined by the events specified for a particular network node, the UE **210** transmits the UL CCCH to that particular network node.

Thus, the UL CCCH configuration of events can be network node specific and the approach described in the present disclosure can be used for either single RAT or multiple RAT scenarios.

One scenario is where there may be multiple RATs operating in the same band as the case where the allocated band is in shared spectrum. In this case, network nodes can be reconfigurable eNBs, RNs or Home eNBs (HeNBs). The reconfigurable nodes can be assigned dynamic component carriers (DCCs) which can be adapted to operate on any RAT and may use any available channel within the shared spectrum.

In a further embodiment, the shared spectrum can be the licensed spectrum that belongs to a single operator and allocated dynamically to different nodes within the operators network or can be a spectrum that is shared among multiple operators. In either case, the assigned channels may be any RAT and the RAT may change based on demand.

In another scenario, a secondary system may be allocated to operate as an underlay of a primary system. Further, the two systems may use different RATs. In this embodiment, the secondary user shares the same resources as the primary user, but with low transmit power in order to reduce the impact to the primary user. Both the primary user and the secondary user may use the UL CCCH to report any events that occurred, as described below. The events can be designed in order to optimize the performance of the combined primary and secondary usage of the shared resources. For example, the primary user can indicate whether or not there is too much interference or outage caused by the secondary usage and the secondary user may adjust its usage accordingly.

In single RAT cases, the approach described below can be used in heterogeneous networks that consist of eNBs, relay nodes and HeNBs. Since some network nodes may not have a backhaul connection, the method of communicating interference statistics in accordance with the present disclosure may be used. The UL CCCH can be used to provide information for interference coordination in the heterogeneous network.

As will be appreciated by those in the art having regard to the above, the UEs do not need to exactly acquire uplink (UL) transmission timing of non-serving network nodes. The network nodes may broadcast/multicast the UL common control channel (UL CCCH) descriptor and associated event triggers for collecting the statistics. All UEs that can correctly decode the broadcast/multicast message of the non-serving cell may check if any of the defined events occurred. For example, an event may be defined as a condition where the interference level measured at the UE is above a given threshold. If an event occurs then the UE may inform the network nodes.

The UL common control channel is designed to be a low overhead feedback channel. Since a UE may satisfy the events from multi-neighboring nodes, the UE may be required to send information on several UL CCCHs. In order to ensure that the UEs are not required to send this feedback to multiple network nodes during the same sub-frame, the sub-frame which contains the UL common control channel may be different for different cells. One way to accomplish this is to use cell specific sub-frame numbers for the UL common control channel. The control channel configuration will thus be dependent on the unique identifier of the node and hence different and non-overlapping for each cell.

In an orthogonal frequency division multiplexing (OFDM) system, such as LTE, if the UEs have UL synchronization with the target network node then the signaling channel can be allocated as little as one OFDM symbol or part of an OFDM symbol. Otherwise, if no UL synchronization is available then the UL signaling channel requires more resources since a sufficient guard time must be added to account for different arrival times of the OFDM symbols.

The above-described embodiment therefore provides for network nodes publishing events and then collecting event specific statistics from the UEs that detect those events and meet the event criteria. From a UE perspective, the UE can review the specifics of the events that it has received over the broadcast/multicast channel to check if any of these events have occurred. If these events have occurred, the UE sends a message on the UL CCCH of the node whose event has been satisfied. The UL communication can be minimal to indicate merely that an event has occurred. Such signaling may be minimized to reduce overhead for the network and battery resources on the mobile device or UE.

Various examples for such signaling are provided below.

### Downlink Distributed Radio Resource Management for ICIC

One example of distributed RRM using the UL CCCH can be for interference mitigation or coordination or adaptive Fractional Frequency Reuse (FFR) on the downlink where both the transmit power and the number of resources used per FFR zone are adapted.

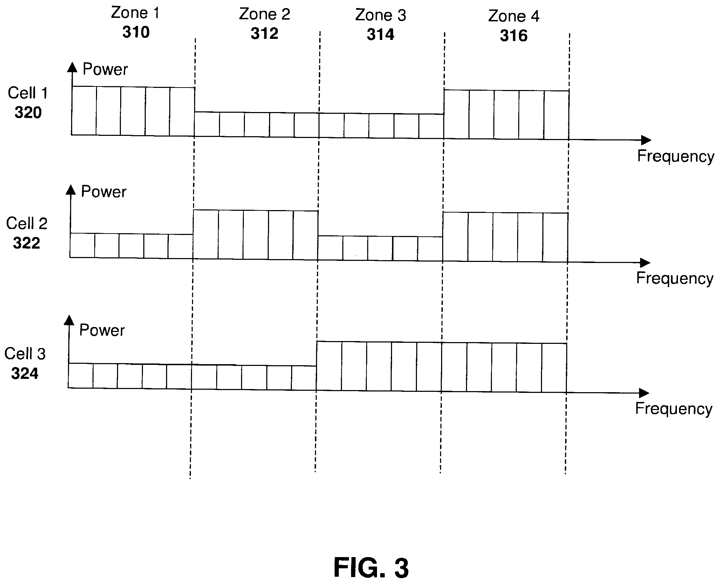

Reference is now made to **Figure 3****,** which shows an example of an FFR implementation.

As seen in **Figure 3****,** four frequency zones exist in the three cells in the example. Namely, zone **310, 312, 314** and **316** provided within cells **320, 322** and **324.**

Cell one uses a higher power in zone **310.** Cell two uses a higher power in zone **312** and cell three uses a higher power in zone **314,** as seen in the example of **Figure 3****.** The lower power used, for example, in zone **310** by cells **322** and **324** provides for lower interference on the cell edge for mobile devices connected with cell **320.**

Zone **316** is a high power zone for all cells.

Thus, when FFR is in enabled, neighboring cells use different resources for high power transmission. By using non-overlapping high power zones, neighboring cells have improved coverage to cell edge UEs.

In order to accommodate cell edge UEs, neighboring cells typically reduce their transmit power on the high power zone of the serving cell. Since the number of cell edge UEs and the amount of traffic destined to the cell edge UEs can vary, it may be beneficial to adapt the number of zones used in the FFR region relative to the reuse zone **316.** The network node or eNB can determine the appropriate number of resources for the different zones and the maximum transmit power level for each zone by collecting statistics of interference levels or outage levels and the average number of resources required by the cell edge UEs from other cells.

As discussed above, in order to collect statistics, each network node may broadcast/multicast events to be measured. One example is provided below.

In one embodiment, four events, EV1, EV2, EV3 and EV4 may be broadcast/multicast by various network elements and received by a UE. In particular, the events are:
EV1: Lᵢ<Lₘₐₓ; I₁>I_{max,1} and R>Rₘᵢₙ
EV2: Lᵢ<Lₘₐₓ and Rₘᵢₙ<R<R₁
EV3: Lᵢ<Lₘₐₓ and R₁<R<R₂
EV4: Lᵢ<Lₘₐₓ and R>R₂

Where the parameters are as follows: Lᵢ is the path loss to the i^{th} non-serving network node or eNB. Lₘₐₓ is the maximum allowed path loss to a non-serving eNB for evaluating events. Iⱼ is the measured power of interference signal with respect to the serving node on zone j. I_{max,,j} is the maximum interference power with respect to the serving node on zone j. R is the average number of resources the UE is assigned to on the downlink. Rⱼ is the threshold on number of resources for zone-j.

Thus, considering event number one above, the condition Lᵢ is less than Lₘₐₓ is used to restrict the collection of statistics to cell edge UEs.

The I₁ being greater than I_{max,1} indicates that the interference with respect to the serving node is greater than the maximum allowed provides for event triggers if interference is greater than the threshold. Further, R being greater than Rₘᵢₙ indicates that the average number of resources that the UE is assigned to is greater than the minimum number of resources threshold. Based on the above, event one will be triggered if the UE is on the cell edge, the interference is greater than the maximum threshold and the number of resources assigned in the downlink to the UE is greater than the minimum.

Similarly, event two may be triggered if Lᵢ is less than Lₘₐₓ and R is less than R₁. Event three is triggered if Lᵢ is less than Lₘₐₓ and R₁ is less than R, which is less than R₂. Event four is triggered if Lᵢ is less than Lₘₐₓ and R is greater than R₂.

The UE receives the broadcast/multicast with all of these events and checks its current measurements against the events and whether or not to send a response to the network node that broadcast/multicast the event.

A plurality of UEs will monitor these events and send feedback to the network node. The network node can use the responses collected from the UEs of a particular cell to adjust the maximum transmit power of each zone. For example, if a large number of UEs indicate that the total interference power for zone j exceeds the threshold for zone j then the network node can reduce the transmit power for that zone.

The network node can have different uplink channels for collecting inter-cell interference coordination statistics from UEs in different nodes.

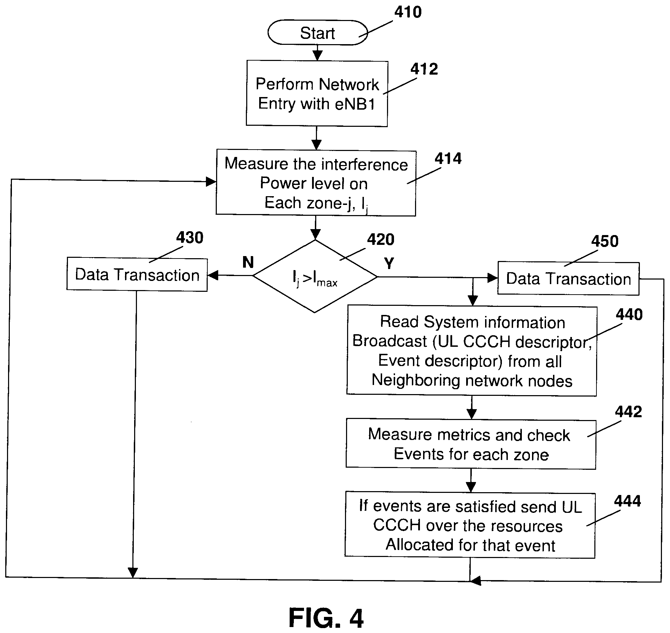

The above is further illustrated with regard to **Figure 4****.** The process of **Figure 4** starts at block **410** and proceeds to block **412** in which an association is performed with a first network node (e.g. eNB1). During this process of network entry, UE acquires the network node specific parameters by reading the broadcast/multicast messages from the network node. The network node specific parameters, for example, also include Iₘₐₓ, Lₘₐₓ, thresholds of R among other system parameters.

The process then proceeds to block **414** in which the interference power level for each zone is measured.

The process then proceeds to block **420** and checks whether the interference power level for a particular zone is greater than the maximum interference power threshold. If no, the process proceeds to block **430** and performs a regular data transaction.

From block **430** the process proceeds back to block **414** to continue measuring the interference power.

If the interference power of a particular zone exceeds the maximum threshold interference power, the process proceeds from block **420** to block **440.** In block **440** the UE reads system information broadcast/multicast from all neighboring network nodes.

Based on the information read at block **440** the process proceeds to block **442** and measures the metrics and checks the events for each zone. Thus, if a first network node indicated that a certain event should be monitored, the UE at block **442** will determine whether or not that event has been triggered.

If the event is triggered the process proceeds to block **444** and sends an UL CCCH over the resources allocated for the event to the network node.

From block **444** the process proceeds back to block **414** and continues to measure interference power.

While performing the processes indicated by blocks **440, 442** and **444,** UE may also be actively participating in data transaction as indicated by block **450.** In other words the UE performs **440, 442** and **444** without (or with minimum impact) any impact to the ongoing data transaction.

Thus, from **Figure 4****,** the present disclosure provides for the monitoring of various events as designated by each network node and the provision of information to those network nodes. The network nodes can then use statistics to determine whether enough mobile devices or UEs have reported that a certain event has occurred and adjust power levels or other resources based on such compilation of event reports.

### Uplink Distributed RRM for ICIC

Similar statistics can be collected for the purpose of uplink ICIC. In one embodiment of the present disclosure, neighboring nodes may broadcast/multicast the following events to be measured by cell edge UEs of a particular cell.
EV1: Lᵢ<Lₘₐₓ; P₁>P_{max,1} and R>Rₘᵢₙ
EV2: Lᵢ<Lₘₐₓ and Rₘᵢₙ<R<R₁
EV3: Lᵢ<Lₘₐₓ and R₁<R<R₂
EV4: Lᵢ<Lₘₐₓ and R>R₂

The parameters above are defined as Lᵢ is the path loss to the i^{th} serving network node. Lₘₐₓ is the maximum path loss to the non-serving eNB for evaluating events. Pⱼ is the transmit power of zone j. P_{max,j} is the maximum transmit power on zone j. R is the average number of resources the UE is assigned on the downlink and Rⱼ is the number of resources threshold for adjusting zone size.

Thus, the first event is used to control the amount of interference to the UEs that are sending the uplink CCCH from the UEs in the cell receiving the UL CCCH. The event counts the number of cell edges UEs with at least Rₘᵢₙ RBs of data to send that have a transmit power than Pₘₐₓ. If the UE satisfies this event then the UE indicates the event that was triggered in the UL CCCH.

The remaining events are used to control the size of the zone used for cell edge UEs, which is the low interference zone for the neighbor cell. When the neighbor node decodes the UL CCCH it can determine the number of neighboring cell edge UEs that require less than R₁ RBs to transmit on the UL, the number of UEs that require between R₁ and R₂ RBs and the number of UEs that require more than R₂ RBs. With this information the neighbor node can adjust the size of its interference zone in order to accommodate the cell edge traffic of its neighbor.

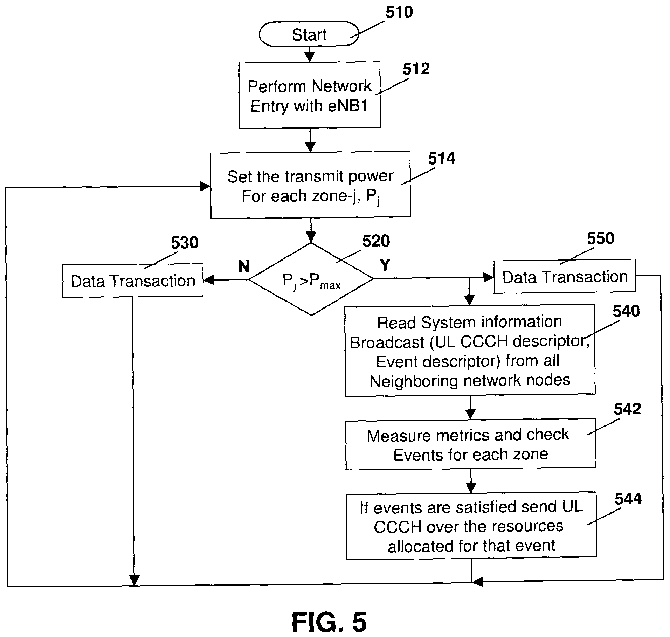

Reference is now made to **Figure 5****,** which shows UE functionality for uplink ICIC.

The method of **Figure 5** starts at block **510** and proceeds to block **512** in which a network entry is performed with a first network node. During this process of network entry, UE acquires the network node specific parameters by reading the broadcast/multicast messages from the network node. The network node specific parameters, for example, also include Iₘₐₓ, Lₘₐₓ, thresholds of R among other system parameters.

The process then proceeds to block **514** and sets the transmit power for each zone.

The process then proceeds to block **520** and checks whether the power for a zone is greater than a maximum power threshold. If no, the process proceeds to block **530** in which a normal data transaction occurs. From block **530** the process proceeds back to block **514** to set the transmit power for each zone.

If the transmit power is greater than a power threshold the process proceeds to block **540** in which system information broadcasts/multicasts from neighboring nodes are read by the UE. This provides the events that the UE can check.

The process then proceeds to block **542** in which the metrics are measured and checked against the events that were received at block **540.**

From block **542** the process proceeds to block **544.** In block **544,** if any of the events are satisfied then the response is sent on the uplink CCCH over the resources allocated for the event.

From block **544** the process proceeds to block **514** in which the transmit power for each zone is set.

While performing the processes indicated by blocks **540, 542** and **544,** UE may also be actively participating in data transaction as indicated by block **550.** In other words the UE performs **540, 542** and **544** without (or with minimum impact) any impact to the ongoing data transaction.

Based on the above, the uplink ICIC functionality for the UE may be provided to the network node for each zone.

### Common Control Channel Structure

A separate uplink common control channel may be needed for collecting statistics from UEs served by each neighbor cell. Therefore, in one embodiment it is desirable that the uplink feedback channel (UL CCCH) should be a low rate channel that uses minimum resources to maximize overall spectral efficiency. One way to reduce the amount of UL resources is to use the same set of resources for the statistics collected from all UEs that belong to a given neighboring cell. For example, different events can use different spreading codes or other separate resources such as time.

In one embodiment, a feedback from a UE may correspond to one of several possible events. Each event is associated with a unique spreading code. This spreading code is used by all the UEs that satisfy the event and the code is transmitted on the resources allocated for the UL CCCH.

Separate UL CCCH channels can be configured to collect information from UEs that belong to different cells. By decoding using event specific spreading codes the network node can determine the number of UEs that satisfy that particular event.

In an alternative embodiment, each UE served by a specific neighboring node can be assigned a node specific spreading code. If the UE satisfies the conditions of an event, it can transmit its serving node specific spreading code on the resources allocated for the given event. Different resources are used for different events. The network node tries to decode the UL CCCH using each spreading code assigned to all its neighboring nodes. The number of spreading codes that are successfully detected represents the number of UEs that satisfy the conditions of the event associated with the resources used.

As indicated above, the spreading code transmitted by the UE may be network node specific. In an alternative embodiment, the spreading code could also be event and network node specific. In the alternative embodiment, the network node tries to decode the uplink CCCH using each spreading code assigned to all its network nodes and all the events defined. The spreading code may also be UE specific if a sufficient number of codes are available.

If the UE is not uplink synchronized with the neighboring network node that is receiving the uplink CCCH then the uplink CCCH should include sufficient guard time, guard band or both to account for the different arrival times or Doppler shift of the OFDM symbols from different UEs.

Alternatively, the uplink CCCH can be designed assuming that UEs are uplink synchronized with the target node. In this case the resources used for the uplink CCCH channel are smaller, but uplink synchronization results in added complexity for the UE, since the UE must obtain and maintain uplink synchronization with multiple network nodes.

The uplink CCCH may be power controlled by a target node so that the received target signal to interference noise ratio (SINR) is the same for each UE for each event. Alternatively, the UEs can use the same transmit power for the uplink CCCH. In this case, the received SINR will be different for different UEs.

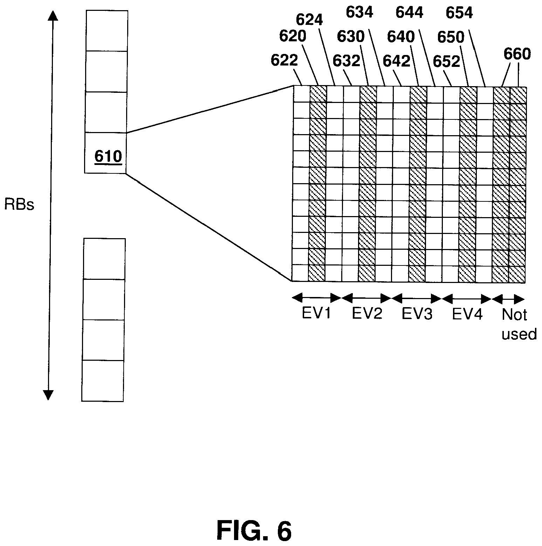

Reference is now made to **Figure 6. Figure 6** shows the UL CCCH for the unsynchronized case. The embodiment of Figure 6 shows a guard time of one OFDM symbol. In particular, an OFDM resource block **610** shows a target OFDM symbol for an event **620** surrounded by guard OFDM symbols **622** and **624.** In the example of **Figure 6****,** the OFDM symbol includes symbols for four events. Each includes a target OFDM symbol as well as guard OFDM symbols. In particular, as illustrated in **Figure 6****,** target OFDM symbol **630** is surrounded by guard symbol **632** and **634.** Target OFDM symbol **640** is surrounded by guard symbols **642** and **644.** Target OFDM symbol **650** is surrounded by guard symbols **652** and **654.** Further, two columns of OFDM symbols are used for interference estimation and are therefore not used for target OFDM signalling for an event. These are shown as symbols **660.**

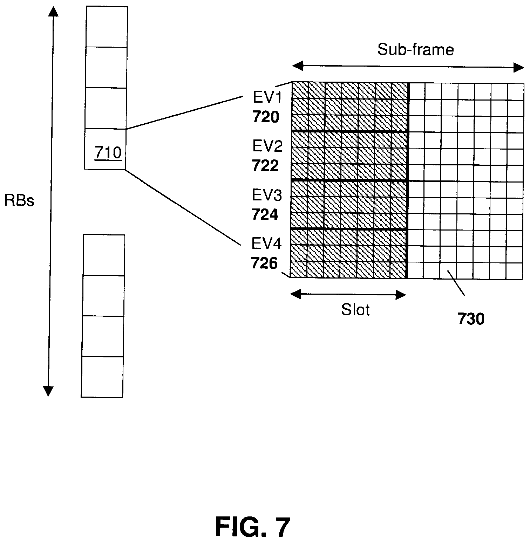

For the synchronized uplink transmission case, reference is now made to **Figure 7. Figure 7** shows a sub-frame **710** having four events, namely events **720, 722, 724** and **726.** Traffic data Symbols may also be communicated and therefore uplink traffic as shown by reference number **730** is provided within the sub-frame **710.**

As will be appreciated by those in the art having regard to the present disclosure, the number of resources used for the uplink CCCH is configurable. If the spreading code is UE specific, the length of the spreading sequence may depend on the loading of the cell.

The event configuration for the corresponding node may be indicated to the UEs. This information can be included in a broadcast/multicast message. For example, the radio frame number and the sub-frame number define the uplink common control channel for each node. All the nodes may share a common control configuration with their neighbors.

Each node broadcasts/multicasts its own control channel configuration. In this case, the UEs can decode the broadcast/multicast message of the neighboring nodes with an acceptable success rate. The transmit power of the broadcast/multicast channel can ensure the desired success rate.

If a network operator has multiple carriers, the uplink CCCH channel can be on one of the carriers. The associated events can be related to any of the carriers used by the network operator. Alternatively, each carrier can have its own uplink CCCH channel.

As will be appreciated by those in the art having regard to the present disclosure, in some embodiments security may be provided by having only authorized UEs providing feedback using the uplink CCCH channel. The broadcast/multicast message indicating the events and the corresponding uplink CCCH descriptors may be encrypted by the serving node. The encryption key may be provided to the authenticated mobile devices. The encryption key may be updated periodically. Mobile devices that are unable to decode the broadcast/multicast information would be unable to access the uplink CCCH.

The above therefore provides for the signalling of events to UEs and the provision of information from the UEs to the network nodes if the event is triggered. The size of the message that needs to be sent to the network nodes is minimal and provides an indication that a UE has had that event triggered with minimum use of radio resources.

In alternative embodiments, if the network nodes have the capability of communicating with other network nodes directly, the ICIC procedure described above may be further simplified. Thus, if the neighbor node's UL CCCH resource descriptor and events for each zone are obtained by the UE by reading the neighbor node's broadcast/multicast information then the above embodiments may be utilized. However, if there is backhaul communication between the network nodes, each network node can obtain the ICIC event descriptor and UL CCCH descriptor from the neighboring network nodes and indicate that information in its system broadcast/multicast information. The UE can obtain the necessary information about the neighboring network nodes by reading the system information broadcast/multicast from its serving network node. Further, the UE can perform the event specific measurement and send the UL CCCH to the neighbor network nodes indicating the event occurrence. This alternative has the advantage of the UE not being required to read the broadcast/multicast information channels of all the neighoring cells.

In a further alternative, the UE can inform event occurrence with respect to the neighboring nodes to the serving node. The serving node can then inform this information to the neighbor nodes via the backhaul connection.

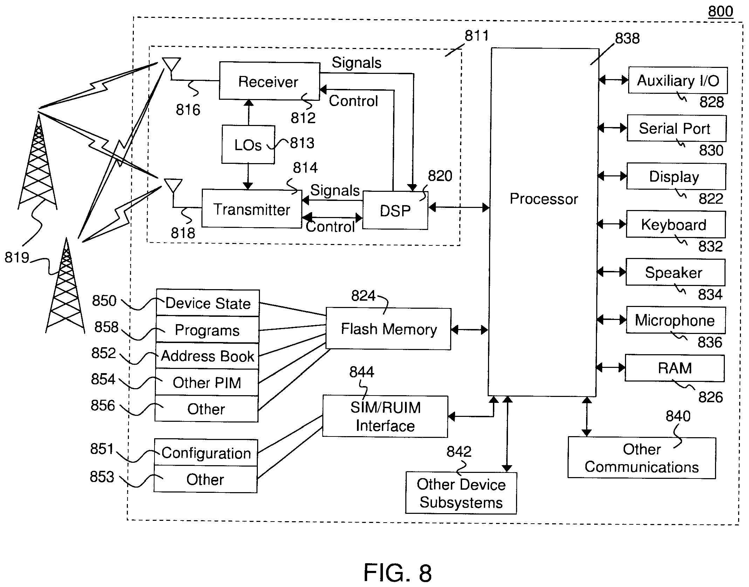

While any UE could be utilized with regard to the above, one example of a UE is provided below with regard to **Figure 8****.**

UE **800** is typically a two-way wireless communication device having voice and data communication capabilities. UE **800** generally has the capability to communicate with other computer systems on the Internet. Depending on the exact functionality provided, the UE may be referred to as a data messaging device, a two-way pager, a wireless e-mail device, a cellular telephone with data messaging capabilities, a wireless Internet appliance, a wireless device, a user equipment, or a data communication device, as examples.

Where UE **800** is enabled for two-way communication, it will incorporate a communication subsystem **811,** including both a receiver **812** and a transmitter **814,** as well as associated components such as one or more antenna elements **816** and **818,** local oscillators (LOs) **813,** and a processing module such as a digital signal processor (DSP) **820.** As will be apparent to those skilled in the field of communications, the particular design of the communication subsystem **811** will be dependent upon the communication network in which the device is intended to operate. The UE **800** may be capable of accessing multiple radio access technologies in accordance with the embodiments described above.

Network access requirements will also vary depending upon the type of network **819.** In some networks network access is associated with a subscriber or user of UE **800.** A UE may require a removable user identity module (RUIM) or a subscriber identity module (SIM) card in order to operate on a network. The SIM/RUIM interface **844** is normally similar to a card-slot into which a SIM/RUIM card can be inserted and ejected. The SIM/RUIM card can have memory and hold many key configurations **851,** and other information **853** such as identification, and subscriber related information.

When required network registration or activation procedures have been completed, UE **800** may send and receive communication signals over the network **819.** As illustrated in **Figure 8****,** network **819** can consist of multiple base stations communicating with the UE. For example, in a hybrid CDMA 1x EVDO system, a CDMA base station and an EVDO base station communicate with the mobile station and the UE is connected to both simultaneously. Other examples of network technologies and base stations would be apparent to those in the art.

Signals received by antenna **816** through communication network **819** are input to receiver **812,** which may perform such common receiver functions as signal amplification, frequency down conversion, filtering, channel selection and the like. A/D conversion of a received signal allows more complex communication functions such as demodulation and decoding to be performed in the DSP **820.** In a similar manner, signals to be transmitted are processed, including modulation and encoding for example, by DSP **820** and input to transmitter **814** for digital to analog conversion, frequency up conversion, filtering, amplification and transmission over the communication network **819** via antenna **818.** DSP **820** not only processes communication signals, but also provides for receiver and transmitter control. For example, the gains applied to communication signals in receiver **812** and transmitter **814** may be adaptively controlled through automatic gain control algorithms implemented in DSP **820.**

UE **800** generally includes a processor **838** which controls the overall operation of the device. Communication functions, including data and voice communications, are performed through communication subsystem **811.** Processor **838** also interacts with further device subsystems such as the display **822,** flash memory **824,** random access memory (RAM) **826,** auxiliary input/output (I/O) subsystems **828,** serial port **830,** one or more keyboards or keypads **832,** speaker **834,** microphone **836,** other communication subsystem **840** such as a short-range communications subsystem and any other device subsystems generally designated as **842.** Serial port **830** could include a USB port or other port known to those in the art.

Some of the subsystems shown in **Figure 8** perform communication-related functions, whereas other subsystems may provide "resident" or on-device functions. Notably, some subsystems, such as keyboard **832** and display **822,** for example, may be used for both communication-related functions, such as entering a text message for transmission over a communication network, and device-resident functions such as a calculator or task list.

Operating system software used by the processor **838** may be stored in a persistent store such as flash memory **824,** which may instead be a read-only memory (ROM) or similar storage element (not shown). Those skilled in the art will appreciate that the operating system, specific device applications, or parts thereof, may be temporarily loaded into a volatile memory such as RAM **826.** Received communication signals may also be stored in RAM **826.**

As shown, flash memory **824** can be segregated into different areas for both computer programs **858** and program data storage **850, 852, 854** and **856.** These different storage types indicate that each program can allocate a portion of flash memory **824** for their own data storage requirements. Processor **838,** in addition to its operating system functions, may enable execution of software applications on the UE. A predetermined set of applications that control basic operations, including at least data and voice communication applications for example, will normally be installed on UE **800** during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape or disk) or other memory known in the art.

One software application may be a personal information manager (PIM) application having the ability to organize and manage data items relating to the user of the UE such as, but not limited to, e-mail, calendar events, voice mails, appointments, and task items. Naturally, one or more memory stores would be available on the UE to facilitate storage of PIM data items. Such PIM application may have the ability to send and receive data items, via the wireless network **819.** In one embodiment, the PIM data items are seamlessly integrated, synchronized and updated, via the wireless network **819,** with the UE user's corresponding data items stored or associated with a host computer system. Further applications may also be loaded onto the UE **800** through the network **819,** an auxiliary I/O subsystem **828,** serial port **830,** short-range communications subsystem **840** or any other suitable subsystem **842,** and installed by a user in the RAM **826** or a non-volatile store (not shown) for execution by the processor **838.** Such flexibility in application installation increases the functionality of the device and may provide enhanced on-device functions, communication-related functions, or both. For example, secure communication applications may enable electronic commerce functions and other such financial transactions to be performed using the UE **800.**

In a data communication mode, a received signal such as a text message or web page download will be processed by the communication subsystem **811** and input to the processor **838,** which may further process the received signal for output to the display **822,** or alternatively to an auxiliary I/O device **828.**

A user of UE **800** may also compose data items such as email messages for example, using the keyboard **832,** which may be a complete alphanumeric keyboard or telephone-type keypad, among others, in conjunction with the display **822** and possibly an auxiliary I/O device **828.** Such composed items may then be transmitted over a communication network through the communication subsystem **811.**

For voice communications, overall operation of UE **800** is similar, except that received signals would typically be output to a speaker **834** and signals for transmission would be generated by a microphone **836.** Alternative voice or audio I/O subsystems, such as a voice message recording subsystem, may also be implemented on UE **800.** Although voice or audio signal output is preferably accomplished primarily through the speaker **834,** display **822** may also be used to provide an indication of the identity of a calling party, the duration of a voice call, or other voice call related information for example.

Serial port **830** in **Figure 8** would normally be implemented in a personal digital assistant (PDA)-type UE for which synchronization with a user's desktop computer (not shown) may be desirable, but is an optional device component. Such a port **830** would enable a user to set preferences through an external device or software application and would extend the capabilities of UE **800** by providing for information or software downloads to UE **800** other than through a wireless communication network. The alternate download path may for example be used to load an encryption key onto the device through a direct and thus reliable and trusted connection to thereby enable secure device communication. As will be appreciated by those skilled in the art, serial port **830** can further be used to connect the UE to a computer to act as a modem.

Other communications subsystems **840,** such as a short-range communications subsystem, is a further optional component which may provide for communication between UE **800** and different systems or devices, which need not necessarily be similar devices. For example, the subsystem **840** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a user equipment (210) comprising:
communicating with a serving node (212);
obtaining (440, 540) an event having event conditions from system information multicast of a neighboring network node (240, 242, 230, 232, 234, 224, 220, 222), wherein the system information multicast includes an uplink common control channel descriptor and event descriptor such that the uplink common control channel descriptor comprises a radio frame number and a sub-frame number, wherein the radio frame number and the sub-frame number define an uplink common control channel and the event descriptor defines the event conditions; and
sending (444, 544) an uplink message using the uplink common control channel to the neighboring network node for any event whose conditions are satisfied utilizing resources allocated for the event.

2. The method of claim 1, wherein the obtaining occurs after a received signal quality from the at least one network node meets a predefined criteria.

3. The method of claim 2, wherein the predefined criteria are obtained by reading a broadcast message from the neighboring network node.

4. The method of claim 2, wherein the predefined criteria includes a threshold on total power of interfering signals.

5. The method of claim 2, wherein the predefined criteria includes a threshold on received power from a serving cell for the user equipment.

6. The method of claim 1, wherein the multicast message is encrypted such that the user equipment can decrypt the message only if the user equipment is authorized.

7. The method of claim 1, wherein the sending utilizes an uplink common control channel for a particular network node.

8. The method of claim 1, wherein the sending utilizes a spreading code unique for the event.

9. The method of claim 8, wherein the spreading code is unique for a network node.

10. The method of claim 1, wherein the sending utilizes a separate uplink common control channel for user equipments belonging to different cells.

11. A user equipment comprising:
a processor; and
a communications subsystem,
wherein the user equipment is configured to perform all the steps of the method of any one of claims 1 to 10.

12. A method at a network node comprising:
multicasting an event having event conditions to a plurality of user equipments, wherein the multicasting includes an uplink common control channel descriptor and event descriptor such that the uplink common control channel descriptor comprises a radio frame number and a sub-frame number, wherein the radio frame number and the sub-frame number define an uplink common control channel and the event descriptor defines the event conditions;
receiving an uplink message, at the network node, from a user equipment attached to any neighboring network nodes, said communication providing an indication that the event conditions are met at the user equipment of the neighboring network node, wherein the uplink message is using the uplink common control channel;
compiling statistics, based on the receiving, of network conditions; and
performing resource allocation based on the compiled statistics.

13. The method of claim 12, wherein all communications are sent utilizing a predetermined transmit power level, and wherein the receiving includes a predefined target signal to interference noise ratio, SINR, at the network node.

## Patentansprüche

1. Verfahren an einer Benutzereinrichtung (210), das aufweist:
Kommunizieren mit einem bedienenden Knoten (212);
Erlangen (440, 540) eines Ereignisses mit Ereignisbedingungen von einem Systeminformation-Multicast eines benachbarten Netzwerkknotens (240, 242, 230, 232, 234, 224, 220, 222), wobei der Systeminformation-Multicast einen Uplink-Common-Control-Channel-Deskriptor und einen Ereignisdeskriptor umfasst derart, dass der Uplink-Common-Control-Channel-Deskriptor eine Funkrahmennummer und eine Subrahmennummer aufweist, wobei die Funkrahmennummer und die Subrahmennummer einen Uplink-Common-Control-Channel definieren und der Ereignisdeskriptor die Ereignisbedingungen definiert; und
Senden (444, 544) einer Uplink-Nachricht unter Verwendung des Uplink-Common-Control-Channels an den benachbarten Netzwerkknoten für jedes Ereignis, dessen Bedingungen erfüllt sind unter Verwendung von diesem Ereignis zugeteilten Ressourcen.

2. Das Verfahren gemäß Anspruch 1, wobei das Erlangen erfolgt, nachdem eine Empfangssignalqualität von dem zumindest einen Netzwerkknoten ein vordefiniertes Kriterium erfüllt.

3. Das Verfahren gemäß Anspruch 2, wobei die vordefinierten Kriterien durch Lesen einer Broadcast-Nachricht von dem benachbarten Netzwerkknoten erlangt werden.

4. Das Verfahren gemäß Anspruch 2, wobei die vordefinierten Kriterien eine Schwelle für die Gesamtleistung von Störsignalen umfassen.

5. Das Verfahren gemäß Anspruch 2, wobei die vordefinierten Kriterien eine Schwelle für Empfangsleistung von einer bedienenden Zelle für die Benutzereinrichtung umfassen.

6. Das Verfahren gemäß Anspruch 1, wobei die Multicast-Nachricht derart verschlüsselt ist, dass die Benutzereinrichtung die Nachricht nur dann entschlüsseln kann, wenn die Benutzereinrichtung autorisiert ist.

7. Das Verfahren gemäß Anspruch 1, wobei das Senden einen Uplink-Common-Control-Channel für einen bestimmten Netzwerkknoten verwendet.

8. Das Verfahren gemäß Anspruch 1, wobei das Senden einen für das Ereignis eindeutigen Spreizcode verwendet.

9. Das Verfahren gemäß Anspruch 8, wobei der Spreizcode für einen Netzwerkknoten eindeutig ist.

10. Das Verfahren gemäß Anspruch 1, wobei das Senden einen separaten Uplink-Common-Control-Channel für Benutzereinrichtungen verwendet, die zu verschiedenen Zellen gehören.

11. Eine Benutzereinrichtung, die aufweist:
einen Prozessor; und
ein Kommunikationssubsystem,
wobei die Benutzereinrichtung konfiguriert ist zum Durchführen aller Schritte des Verfahrens gemäß einem der Ansprüche 1 bis 10.

12. Ein Verfahren an einem Netzwerkknoten, das aufweist:
Multicasting eines Ereignisses mit Ereignisbedingungen an eine Vielzahl von Benutzereinrichtungen, wobei das Multicasting einen Uplink-Common-Control-Channel-Deskriptor und einen Ereignisdeskriptor umfasst derart, dass der Uplink-Common-Control-Channel-Deskriptor eine Funkrahmennummer und eine Subrahmennummer aufweist, wobei die Funkrahmennummer und die Subrahmennummer einen Uplink-Common-Control-Channel definieren und der Ereignisdeskriptor die Ereignisbedingungen definiert;
Empfangen einer Uplink-Nachricht, an dem Netzwerkknoten, von einer Benutzereinrichtung, die mit benachbarten Netzwerkknoten verbunden ist,
wobei die Kommunikation eine Angabe vorsieht, dass die Ereignisbedingungen an der Benutzereinrichtung des benachbarten Netzwerkknotens erfüllt sind, wobei die Uplink-Nachricht den Uplink-Common-Control-Channel verwendet;
Kompilieren von Statistiken, basierend auf dem Empfangen, von Netzwerkbedingungen; und
Durchführen einer Ressourcenzuteilung basierend auf den kompilierten Statistiken.

13. Das Verfahren gemäß Anspruch 12, wobei alle Kommunikationen unter Verwendung eines vorgegebenen Sendeleistungspegels gesendet werden, und wobei das Empfangen ein vordefiniertes Soll-Signal-zu-Interferenz-Rauschverhältnis (SINR - signal to interference noise ratio) an dem Netzwerkknoten umfasst.

## Revendications

1. Procédé exécuté sur un équipement utilisateur (210), comprenant les étapes consistant à :
communiquer avec un noeud de desserte (212) ;
obtenir (440, 540) à partir de la multidiffusion d'informations système par un noeud de réseau voisin (240, 242, 230, 232, 234, 224, 220, 222) un événement possédant des conditions d'événement, dans lequel la multidiffusion d'informations système comprend un descripteur de canal de commande commun montant et un descripteur d'événement tels que le descripteur de canal de commande commun montant comprend un numéro de trame radio et un numéro de sous-trame, dans lequel le numéro de trame radio et le numéro de sous-trame définissent un canal de commande commun montant, et le descripteur d'événement définit les conditions d'événement ; et
émettre (444, 544) vers le noeud de réseau voisin un message montant en utilisant le canal de commande commun montant, pour tout événement dont les conditions sont satisfaites, en utilisant des ressources attribuées pour cet événement.

2. Procédé selon la revendication 1, dans lequel l'étape d'obtention se produit après que la qualité d'un signal reçu dudit au moins un noeud de réseau répond à des critères prédéfinis.

3. Procédé selon la revendication 2, dans lequel les critères prédéfinis sont obtenus en lisant un message diffusé par le noeud de réseau voisin.

4. Procédé selon la revendication 2, dans lequel les critères prédéfinis comprennent un seuil de puissance totale des signaux brouilleurs.

5. Procédé selon la revendication 2, dans lequel les critères prédéfinis comprennent un seuil de puissance reçue à partir d'une cellule de desserte de l'équipement utilisateur.

6. Procédé selon la revendication 1, dans lequel le message diffusé est chiffré, si bien que l'équipement utilisateur ne peut déchiffrer le message que si l'équipement utilisateur est autorisé.

7. Procédé selon la revendication 1, dans lequel l'étape d'émission utilise un canal de commande commun montant pour un noeud de réseau particulier.

8. Procédé selon la revendication 1, dans lequel l'étape d'émission utilise un code d'étalement unique pour l'événement.

9. Procédé selon la revendication 8, dans lequel le code d'étalement est unique pour un noeud de réseau.

10. Procédé selon la revendication 1, dans lequel l'étape d'émission utilise un canal de commande commun montant qui est distinct pour des équipements utilisateurs appartenant à des cellules différentes.

11. Équipement utilisateur comprenant :
un processeur ; et
un sous-système de communication ;
dans lequel l'équipement utilisateur est configuré pour exécuter toutes les étapes du procédé selon l'une quelconque des revendications 1 à 10.

12. Procédé exécuté sur un noeud de réseau, comprenant les étapes consistant à :
diffuser un événement possédant des conditions d'événement vers une pluralité d'équipements utilisateurs, dans lequel la diffusion comprend un descripteur de canal de commande commun montant et un descripteur d'événement tels que le descripteur de canal de commande commun montant comprend un numéro de trame radio et un numéro de sous-trame, dans lequel le numéro de trame radio et le numéro de sous-trame définissent un canal de commande commun montant, et le descripteur d'événement définit les conditions d'événement ; et
recevoir sur le noeud de réseau un message montant provenant d'un équipement utilisateur rattaché à des noeuds de réseau voisins quelconques, ladite communication fournissant une indication du fait que les conditions d'événement sont satisfaites sur l'équipement utilisateur du noeud de réseau voisin, le message montant utilisant le canal de commande commun montant ;
calculer des statistiques en fonction de la réception des conditions du réseau ; et
réaliser l'attribution des ressources en fonction des statistiques calculées.

13. Procédé selon la revendication 12, dans lequel toutes les communications sont effectuées en utilisant un niveau prédéterminé de puissance d'émission et dans lequel l'étape de réception possède un rapport prédéfini voulu signal sur interférences et bruit, SINR pour « *Signal to Interference plus Noise Ratio* », au niveau du noeud de réseau.
